# EUROPEAN PATENT SPECIFICATION

(11) **EP 2 568 208 B1**
(45) Date of publication and mention of the grant of the patent: **14.05.2014**
(21) Application number: 12158533.5
(22) Date of filing: 08.03.2012
(51) Int. Cl.: F16L 59/02

(54) **Duct insulation**
Kanalisolation
Conduit d'isolation

(30) Priority: 09.09.2011 GB 201115667
(43) Date of publication of application: 13.03.2013
(73) Proprietor: Polypipe Limited, Doncaster, Yorkshire DN12 1ES (GB)
(72) Inventor: Reaney, Matthew James William, Chesterfield, Derbyshire S42 6BP (GB)
(74) Representative: Carpmael, Robert Maurice Charles

(56) References cited:
- WO-A1-2005/045296
- AT-U1- 11 429
- DE-U1-202011 002 015
- GB-A- 1 327 413

## Description

The present invention relates to duct insulation, and in particular a duct insulation system suitable for but not necessarily exclusively for, use with ducts and/or pipes in a ventilation distribution system.

Ducts and/or pipes are used in ventilation distribution systems, which systems may be to deliver and remove air, e.g. to control the temperature of a particular space, or to remove moisture, odours, smoke, heat, carbon dioxide, dust, and airborne bacteria, or other undesirable airborne substances from particular spaces, or even to distribute other gases, e.g. to replenish or circulate oxygen or air.

The insulation of the ducts within these systems is often important to ensure that the systems are energy efficient, or to allow them to achieve a high level of temperature control. Insulation in this application refers to insulation against heat loss.

Ventilation distribution systems may also rely on the insulation of ducts therein to prevent condensation on or in the ducting, and to retain the heat of extracted air which passes through the ducts. This is especially the case if the ducting transverses an unheated space, such as an attic or loft space. Indeed, poorly insulated ducting can reduce the energy efficiency of a ventilation distribution system, which can result in a large amount of energy wastage, potentially in terms of heat losses/reheat costs, or in terms of servicing time - having to stop the system to remove the build-up of condensation, and potentially also the consequential dirt entrapment.

Conventional insulation systems for ventilation ducts and/or pipes typically involve the use of materials manufactured from foil-faced bubble wrap. An example of this is Thermapipe®. These prior art systems involve the wrapping of a duct or pipe with the wrap so as to form an insulation layer. The wrap may be a multi-layer bubble wrap with aluminium foil bonded to the outer face. However, changes to Building Regulations at least in the United Kingdom could reduce the applicability of such forms of insulation - much higher levels of insulation may be needed than that achievable with single layers of the prior art wraps.

In addition, conventional insulation materials offer only minimal protection for the pipe or duct against damage such as puncturing or compression/deformation, or the like. After all, the bubble wrap is designed to be flexible - for wrapping around the duct or pipe! Even the use of bubble wrap with an aluminium outer layer, for example, does not protect the duct or pipe in any way from external damage of that type since that metallic layer is too thin to offer significant structural strength. Attention is drawn to the disclosures of AT 11 429 U1, WO 2005/045 296, GB 1,327,413, and DE 20 2011 002 015 U1.

The present invention seeks to overcome at least one of the disadvantages of the prior art.

According to a first aspect of the present invention there is provided a duct insulation system as claimed in claim 1, for insulating at least a part of a ducting system, comprising a plurality of shells of insulating material for arrangement around or along a length of a ducting element within the ducting system and coupling means for holding at least two adjacent shells together, wherein the system, in use, surrounds at least a substantial part of the ducting element and provides a substantially rigid outermost casing around the ducting element.

The ducting element may be a straight duct, such as a tube or pipe, or joints or bends therebetween.

Preferably the coupling means are located between said shells.

Preferably the coupling means are formed of insulating material.

Examples of suitable insulating material are well known in the building industry, and can include any material which reduces heat transfer by conduction, radiation and/or convection. Preferably the insulating material is formed of one or more layers of material selected from any known insulating material including any one or more of structural insulated panels (SIP), expanded polystyrene foam, vacuum insulated panels, silica aerogel, polyurethane rigid panels, foil-faced polyurethane rigid panels, foil-faced polyisocyanurate rigid panels, polyisocyanurate spray foam, phenolic spray foam, polyurethane spray foam, phenolic rigid panel, Thinsulate® clothing insulation, urea-formaldehyde panels, urea foam, polystyrene board, air-entrained concrete, icynene loose-fill, icynene spray, cardboard, cellulose, fibreglass batts and blankets, glass wool, natural fiber, wood fiber, cotton batts, rock and slag wool batts and loose-fill, polyethylene foam, perlite loose-fill, cementituous foam, wood panels (e.g. sheathing), vermiculite, straw bale, brick, poured concrete or a combination of any of these materials, including layers thereof with air gaps therebetween. Most preferably the insulating material is expanded polystyrene foam, either with or without a foil layer applied thereto, and either with or without carbon fillers, since expanded polystyrene foam would be very cost efficient, and small amounts of carbon offer a higher insulatory value. Other preferred materials include CFC/HCFC-free rigid phenolic foams and CFC/HCFC-free rigid urethane insulation foams, again with or without a foil layer, again since they offer a cost efficient solution, and potentially also a higher insulatory value.

The skilled person will understand that the listed materials above are intended also to include all varieties of those particular materials which are suitable for use as an insulating material. For example, polyurethane rigid panels include such panels which are pentane expanded, and those panels which are CFC/HCFC expanded. They also include those panels which are not aged (i.e. initial) and those panels which have been aged from 5-10 years. Additionally, expanded polystyrene foam includes, for example, low-density extruded, expanded polystyrene, and high-density moulded, expanded polystyrene.

The shells and coupling means of the insulation system may be formed of the same insulating material or of different respective insulating materials. Preferably the shells and coupling means are integrally formed together as single piece components, whereby each shell is prefitted with the respective components of the coupling means.

The thickness of the shells may be generally constant across at least a significant extent of the shells, and that thickness may be chosen according to the required degree of insulation for the duct (and known insulatory properties of the chosen material(s)) and/or for the required rigidity of the insulation system (and the known structural properties of the chosen material(s)).

Composite layers of materials (each layer being of similar or different materials and/or thicknesses to one another) might also be used. Foil coatings are a preferred example of this.

Preferably the shells are formed of a material, or a composite of materials, with a total thickness of between 10mm and 40mm, and most preferably about 25 mm. The thickness is taken as being the primary or predominant thickness - i.e. the thickness over the majority of the shell - certain areas may of course need thinner or thicker thicknesses, e.g. to accommodate bends or sockets or fixing brackets.

The shells may be formed of a plurality of wall sections, some or all of which wall sections may be substantially planar.

The walls may comprise a top wall and/or a bottom wall, and one or more side walls. This is particular applicable for surrounding ducts that have a generally square or rectangular section.

The top or bottom walls may be arranged substantially perpendicular to the side walls. Each shell might then define half of a generally cuboidal (or rectangular in section) casing that defines an internal space for accommodating the duct.

Each shell, in use, will preferably surround at least a substantial part of the duct, e.g. at least a quarter of the duct (e.g. a quartile segment, or alternatively a quarter of the perimeter). For arrangements requiring two shells, typically each will surround half of the duct. Other arrangements, however, might require more than two shells for surrounding the duct - e.g. three shells, each circulating around about 120° of the duct, or four shells, each circulating around about 90° of the duct, or one wall of the duct, particularly where the duct is rectangular (or square) in section.

Only some of the walls of the shells may be substantially planar, with others being curved or slightly/partly curved, e.g. rounded corners, or blended surfaces. In other arrangements the walls are all curved - e.g. for where the duct is round or elliptical.

The shells may provide a cuboidal outermost casing for a substantial part of the duct, and the shell can extend both circumferentially around part of the duct and linearly along the length of the duct. However in an alternative embodiment, the shells are formed of one continuously curved wall, in section. Different shapes are also possible, although it is preferred for the shells to be designed or sized to match or fit over the shape of an underlying duct. For example, the wall of the shells may be generally arcuate in section in order to define a half of a generally cylindrical space for surrounding at least a substantial part of a round (cylindrical) duct. In use, the shells may then together provide a generally cylindrical outermost casing for encompassing a substantial part or length of a duct.

The system may comprise at least a top shell and a bottom shell for arrangement around or along the length of a duct. The top shell and the bottom shell will typically be arranged parallel to one another in use. In section they will surround the duct.

Preferably each shell comprises one or more walls that are arranged to define a space for accommodating the upper or lower portion of a duct. For example, a cylindrical duct may be surrounded by at least two curved (usually hemi-cylindrical) shells, whereas a rectangular or square duct may be surrounded by two U-shaped shells.

The shells may alternatively provide a casing of other shapes or cross-sections, such as a square cross-section, or an ellipse-shaped cross-section. The shells might even be comprised of a mixture of shapes and cross-sections, such as an irregular or non symmetrical (linear or rotational) shape. Symmetrical or regular shapes, however, are preferred - they can usually facilitate the choice or design of suitable manufacturing techniques.

Typically the shells each extend around approximately half of the duct's outer circumference or perimeter, and extend along at least a substantial portion or length of the duct.

The ducting for which the present invention is provided may comprise a plurality of assembled ducting elements. Different shell designs may be provided for each of the different forms or designs of duct elements. For example, simple gutter-like elements may be provided for surrounding ducting pipes, T-shaped shells may be required for surrounding T-connectors of a ducting system, L-bend shells or other angular bends may be appropriate for surrounding ducting bends, and further designs of shell may be needed for surrounding other types of ducting joint. As a result, each shell, or each pair/collection of shells might only extend along a part of the ducting system as a whole, albeit still potentially a substantial or significant part thereof, i.e. a bend, a joint or a part of a length of a straight run of pipe. For each shell pair, or each shell collection, however, it is preferred that that pair or that collection together surrounds the perimeter or circumference of the duct. Further, each shell of that pair or that collection is preferably generally similar, in shape to the other(s) in that pair or collection, or symmetrical relative to the other(s) in that pair or collection or identical in shape relative to the others in that pair or collection. The latter allows a single moulding to be used to produce each shell of that pair or collection, and where more than two shells are provided in such a collection, a like benefit is also achieved just with two (or more than two but less than all) of those shells being identical.

Preferably the present invention provides at least one embodiment in which the shells provide a rigid casing for straight sections of ducting. Each straight section of ducting may therefore be surrounded by at least two shells, and the shape of the shells typically corresponds generally to the shape of the duct being surrounded. By straight we mean substantially straight.

In preferred arrangements, the shells and the two or more components are typically arranged such that the components connect together along substantially the whole length or side of the shell, rather than at just a small number of discrete locations therealong. This is to allow the shells to be securely held together along substantially the full length of the shells, e.g. at one or two or more of the peripheral or extreme edges or sides of the shells. For example, if there are two shells surrounding a cylindrical duct, then if each shell is an arcuate or hemi-cylindrical shell, with the upper shell having two linear edges at the ends of the arcuate shape, which edges will be in contact with two corresponding or mateable edges of the lower shell, then the component on each respective end or edge may run along substantially the full length of that edges for mating with a corresponding mating component on the opposing shell's end or edge.

Preferably all of the connecting means or components thereof for one of the shells are formed integrally into or onto that respective one of the shells. Likewise the other shell or shells is or are integrally formed with their respective connecting means or components thereof.

Preferably the shells are formed such that the connecting means and the shells are identical or reversible from one shell to the other. Then, with appropriate connecting means - either the integral ones or separate ones, dependent upon the designs thereof - it would become possible to reverse one shell against another so as to bring the respective connecting means thereon into respective registration for joining together, either with or without a separate additional connecting means, again dependent upon the designs thereof. With this arrangement, when there are two shells, they can be identical or reversible whereby either shell can be either an upper shell or a lower shell. Likewise, if more than two shells are involved in surrounding the duct, each of them could be identical. With identical shells, fewer manufacturing tools are needed.

Each joining edge of a shell may feature one length of a first form of connection means, e.g. a male connector, and then a corresponding length of a second form of connection means, e.g. a corresponding female connector. This can be arranged such that the reversibility of the shells is maintained, for example by positioning the lengths symmetrically with respect to one another along the length of that edge.

Each length of edge comprises multiple such lengths of first and second forms of connection means, in the form of castellations teeth extending along the respective edges.

Each shell is preferably arranged to have end surfaces that face corresponding end surfaces of adjacent shells. The end surfaces preferably have their own coupling or connecting means for holding adjacent shells together. Preferably those coupling or connecting means are integrally formed on the shells, but they may alternatively be (or they may alternatively comprise) separate components. Preferably the coupling means hold adjacent shells together by means of a friction or interference fit. Other means of holding the surfaces together are, however, possible, such as hooked or hinged joints combined with other joint forms for connecting resulting free end surfaces. Nevertheless, it is preferred that common forms of connecting means are deployed for each pair of connecting surfaces.

Preferred examples of the types of joints between shells, for use in the present invention, whether it be where the shells meet when passing around the ducts, or between ends of the shells when butting up against further parts or elements of the duct insulation system, may be achieved using tongue and groove connections, dovetail connections, pin and socket connections, biscuit type connections, butted and glued connections, hinged connections, e.g. via separable hinge elements, or even hook and loop type connections (such as Velcro®).

The coupling means may comprise two sections or two components, and only those two sections or components - a top section and a bottom section. The top section and the bottom section will typically be parallel to one another when joined together.

The shells preferably each define a space for surrounding at least a substantial part of the ducting element for which it is designed to provide insulation. The inside of the shells will typically approximate the external shape of that part of the ducting element, and one aspect of the invention is a ducting element in combination with one or more insulating shell having such an internal shape. Therefore, the shape of the internal wall of the each shell matched the shape of the underlying ducting element. For ducting elements in the form of joints, elbows or bends, that internal shape can be suitably profiled to accommodate the bends, protrusions or ridges of that given element.

The shells may each comprise a plurality of walls, which may be substantially planar or curved, internally and/or externally.

Each shell preferably has an outer surface or end wall for engaging with a corresponding surface of an adjacent shell located longitudinally along the ducting system in order for the two shells to butt up against one another. Those surfaces may also have coupling means so that the two adjacent shells can be joined together. The coupling means may take the form of any of the coupling means discussed above. However, preferably, as with the other coupling means, the joint will comprise a friction fit or an interference fit.

In one embodiment, the shells are for surrounding ducting element in the form of an equal T-junction. Such a junction has substantially the same distance from the centre of the T-junction to the each of at least two of the three ends of the "T" - generally the two linearly aligned ends. In place of a T-junction, the junction may be a Y-junction. A U-bend, an L-bend or a V-bend might also be being surrounded, and they too might be such that their arms extend the same distance from the centre of the bend. Asymmetrical bends and junctions might also be accommodated by shells of the invention, although for them the two or more shells are unlikely to be able to be reversible.

Preferably each shell of a pair of shells (or a set or collection of shells) is formed from a single or common mould design, i.e. the mould's cavity does not need to be changed dependent upon whether the shell is an upper shell or a lower shell, or a left hand shell or a right hand shell. This can occur even if the components of the coupling means are formed integrally into or onto respective parts of the shells.

Preferably the duct insulation system comprises an outer layer of insulating material along and/or around a substantial part of the shells and/or a substantial part of the coupling means. The thickness and weight of this additional layer may be chosen according to the required rigidity of the system, and/or for resisting damage such as puncturing or deformation of the duct, or may simply be to offer additional insulation properties. For example, a foil layer can reduce radiant heat loss, rather than greatly reducing conductive heat losses (i.e. the usual function of expanded foam insulation layers).

The duct insulation system as defined above is fitted onto ducts or ducting in a ventilation distribution system.

In an alternative arrangement there is provided a kit of parts adapted to form a duct insulation system as defined above, comprising a plurality of shells for arrangement around or along the length of a duct, and coupling means for holding adjacent shells together. The shells are preferably part of the duct insulation system defined in relation to the preceding aspects of the invention.

The kit of parts may additionally comprise ducting.

Preferably the kit of parts is supplied in an unassembled form.

The present invention also provides a method of insulating a ducting system comprising providing a kit of parts, or a duct insulation system, as defined above, and assembling the duct insulation system onto the ducting system by surrounding elements of the ducting system using pairs or sets of shells of that duct insulation system.

Preferred embodiments of the present invention will now be described by way of example only with reference to the accompanying drawings in which:
Figure 1 shows a part-exploded perspective view of a duct insulation system, not in accordance with the present invention, but useful for understanding the present invention;
Figure 2 shows a part-exploded perspective view of an alternative duct insulation system, in use, which is not in accordance with the present invention, but which is useful for understanding the present invention.
Figure 3 shows an exploded perspective view of a pair of shells from Figure 1 for surrounding an approximately 90 degree bend of a duct;
Figure 4 shows an exploded perspective view of an alternative pair of shells, which is in accordance with the invention, also for surrounding an approximately 90 degree bend of a duct;
Figure 5 shows a perspective view of a pair of shells from Figure 2 surrounding a T-junction joint of a duct; and
Figure 6 shows an exploded perspective view of the shells and joint of Figure 5.

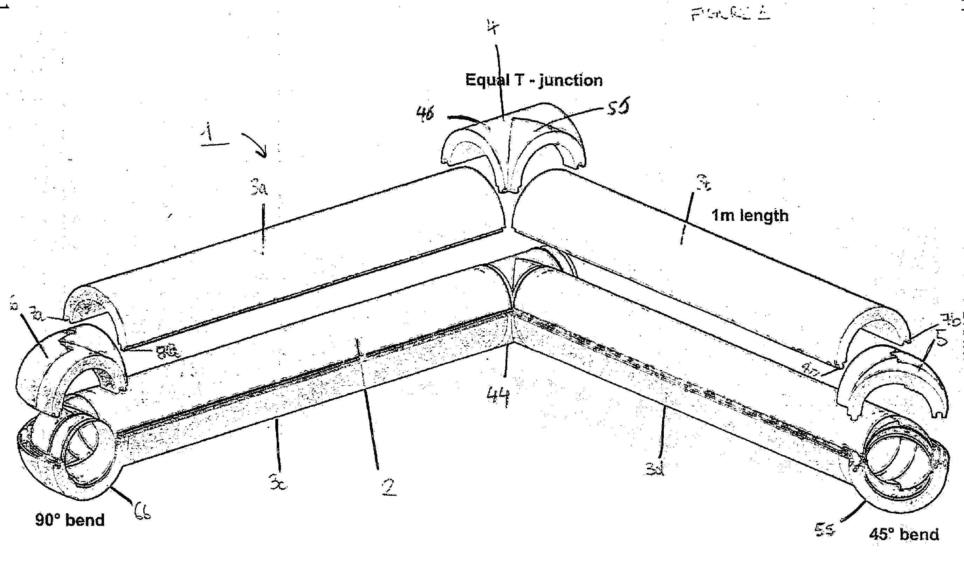

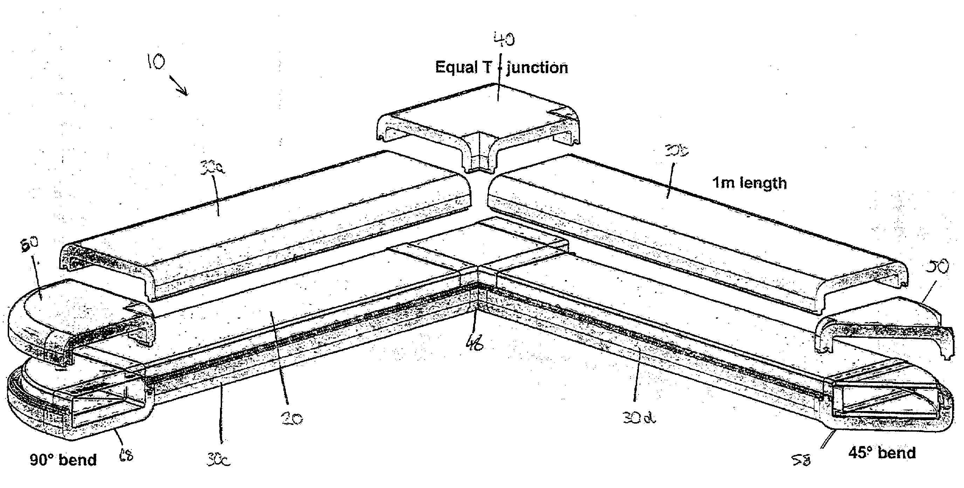

Referring first to Figure 1, there is shown a duct insulation system 1, which is useful for understanding the invention, for in use surrounding a duct 2. The duct insulation system 1 as illustrated includes five pairs of shells 3a, 3b, 3c, 3d, 4, 5, 6. The shells each feature coupling means, whereby the shells can join together once they are surrounding the duct. The shells provide a substantially rigid outermost casing for the duct.

There are four straight shells 3a, 3b, 3c, 3d shown in this figure, each forming one of a pair of shells, and they each have a curved cross-section. They each extend substantially the full length of a substantially straight section of the duct, and approximately half of the circumference of those straight sections of the duct. The lengths of the shells can be cut to length to suit alternative (i.e. shorter) duct lengths, or can be joined or butted together to suit longer duct lengths.

These pairs of straight shells are complementary to one another in that they connect together at their edges, i.e. along their lengths, in this example by each having a component of a dovetail joint running along each edge, which component extends inwardly or outwardly from a straight edge of the respective shell. The upper shells of the complementary pairs have a female connector 7a, 7b - a dovetail groove - extending inwardly of one of the edges, and along the length of that one edge, and a male connector 8a, 8b - a tapering projection - extending outwardly from the other edge, and along the length of that other edge. These connectors are continuous in this embodiment. The lower shells then have corresponding male and female connections along its two edges for engaging with the connections of the first shell of the pair. These opposing pairs of connectors therefore engage with each other when the complementary dovetail grooves and projections on the top and bottom shells compress together.

The shells shown in this figure are approximately 1m in length, although other lengths are possible. The shell's uncut length can be set or chosen to depend on the length of a substantially straight, uncut ducting element - i.e. stock lengths, so that by default the lengths do not need to be cut to fit to a standardised ducting length. However, whereas ducting tends to have significant bending strength, the materials chosen for the insulatory shells might have lower bending strengths, whereby shorter lengths might instead be preferred for the shells in stock items, whereby multiple lengths of insulatory shells might be the norm for most straight ducting installations.

It is desirable to size the section of the shells such that the internal profile, when they surround the duct, closely engages against the duct. This serves to minimise relative rotations between the duct and the shell, thereby reducing the likelihood of shell detachment from the duct - the shell in effect grips the duct.

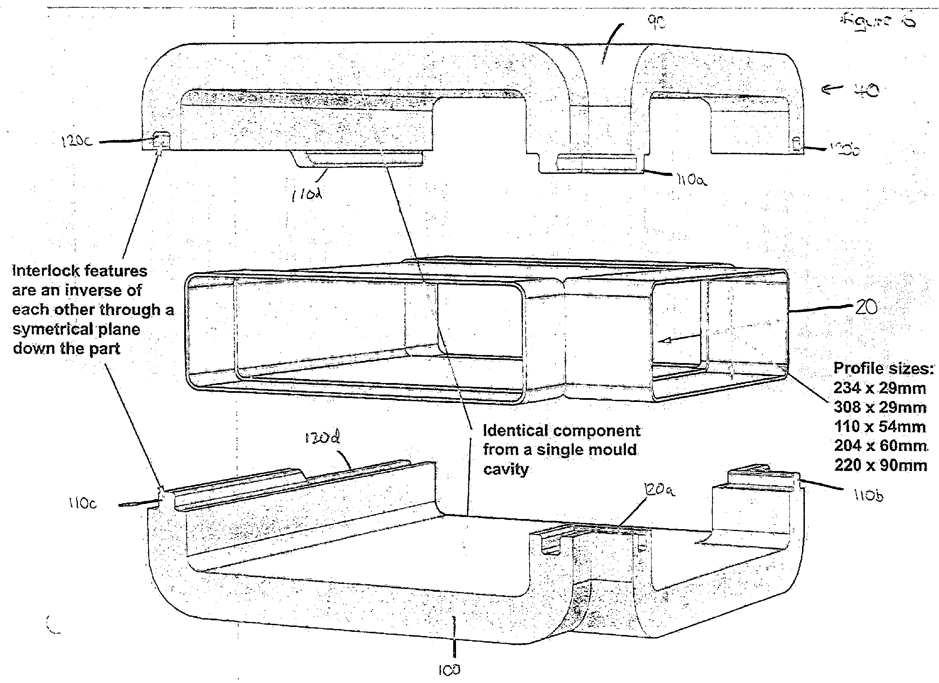

The system also comprises pairs of shells 4 for substantially surrounding a T-junction joint 20 of the duct. Only the top section is clearly shown in Figure 1, and from that figure three of the four components (two dovetail grooves and two projections) for connecting opposing shells together can be seen. With reference to Figure 6, however, additional details of these connections can be ascertained, whereby all four elements can be seen. They will be described in greater detail below.

Each shell for this T-junction embodiment has three planar outer surfaces, or end surfaces, which are provided to butt up against or engage with opposing surfaces of adjoining shells along the ducting system, such as the straight shells of this embodiment. These outer surfaces each form the edge wall of three arches - here semicircular - that define or illustrate the general cross-section of the shells.

The inside wall of the shells then defines the inside space of the T-junction shells, and that surface is preferred to closely match the external surface shape of the T-junction of the ducting. As such it has a generally semicircular straight back 46 and a central, forwardly extending branch 56 that is spliced into that back 46. The shell, with those two portions (the back and the branch) is generally formed from a single casting (or moulding), however, whereby the splice is a visual effect only - they are actually two integrally formed components.

The opposing shell 44 can be made with identical features, whereby the upper shell and the lower shell are identical and reversible for allowing a single mould shape to produce both shells. See again the description for Figure 6.

In addition to the T-junction shells, further shells are produced for bends. Figure 1 illustrates two such additional designs - the 45° bend shells 5, 55 are for surrounding a 45 degree bend of the duct, and 90° bend shells 6, 66 are for surrounding a 90 degree bend of the duct. Both of these shell forms are provided as pairs of shells, and in the illustrated embodiments, they retain a substantially constant cross section, which rotates around the shells substantially similar to a part segment taken from a toroid. Straight ends, however, extend from the ends of those bends to provide greater integrity for the shells, and the dovetail components.

Each pair comprises a top shell 5, 6 and a bottom shell 55, 66, each with inner surfaces shaped according to the topography of the underlying duct, as with the T-junction and the straight shells.

Yet further, they each have two outer planar surfaces, or end walls, for butting against or for joining onto, ends of other shells - adjacent ones along the ducting.

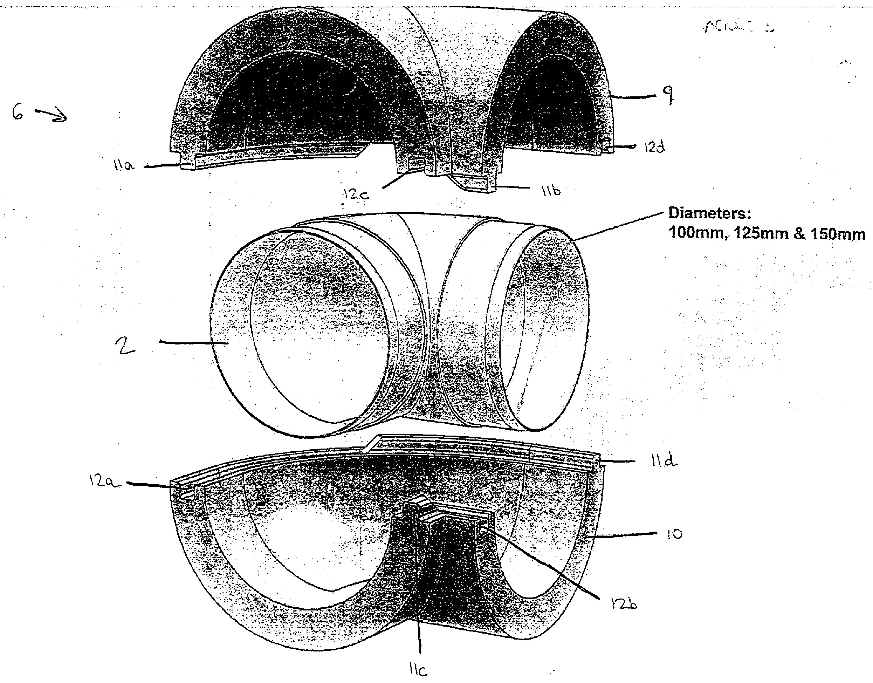

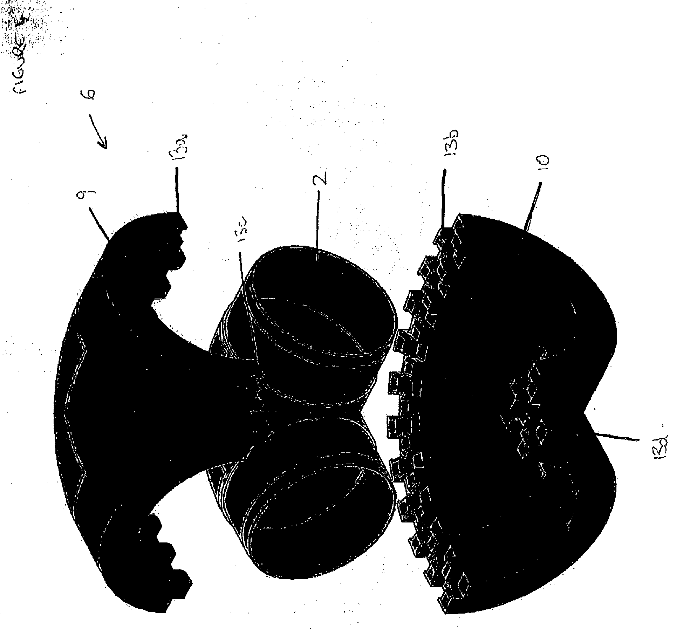

The bottom edges of the top shell, like the T-junction shell, have four components for connecting together with corresponding components on the top edges of the bottom shell. These components can be best seen in Figure 3, as discussed below. However, in brief they comprise further dovetailed tongue and groove joints, with each shell having two dovetail grooves and two dovetail projections, although other types of connection are possible (e.g. see Figure 4).

Referring next to Figure 2, which shows an embodiment which is useful for understanding the invention, there is shown a part exploded perspective view of an alternative form of duct insulation system 10 - this time for surrounding an approximately rectangular-sectioned ducting system 20. The previous embodiment was for surrounding a generally circular sectioned ducting system, and hence the generally semi-circular sections for the shells. This second embodiment, however, instead has generally rectangular sectioned shells, each shell defining an internal profile that is adapted to surround approximately half of the section of the ducting component to be contained therein. This second embodiment, however, again comprises four straight shells 30a, 30b, 30c, 30d, arranged in two pairs, and six joint-forming shells 40, 48, 50, 58, 60, 68, arranged also in pairs.

The shells in this figure have a substantially rectangular cross section, albeit with two curved corners so that each pair together has four curved corners. They still, however, extend along lengths of the ducting system, and each one is adapted to extend around approximately half of the circumference of the duct. Therefore, each shell defines a generally half-cuboidal space for surrounding the upper or lower surface of the duct.

The joint forming shells are also again for T-junctions, 45° bends and 90° bends. As such, other than for the different basic section, they are very similar, in that the components for allowing the pairs of shells to join together are identical.

Referring next to Figure 3, which also shows an embodiment which is useful for understanding the invention, an exploded perspective view of a 90° bend shell pair 6 is shown, for in use surrounding a 90 degree bend of a duct 2. This figure illustrates one embodiment of the invention in which each shell has four components for connecting together with opposing components of an opposing shell of the pair by a dovetail joint.

The top shell 9 of the pair of shells shown has two projections 11a, 11b and two dovetail grooves 12c, 12d, and the bottom shell 10 has complementary dovetail grooves 12a, 12b and complementary projections 11c, 11d. The projections expand in width as they extend away from the end surface of the shell, thereby being dovetailed, and the grooves likewise expand in width as they extend beneath the surface of their corresponding end surfaces, such that they likewise are dovetails. The two can then fit together with a gripping fit - the resilience of the material from which the two shells are formed allows the dovetails to push together. Rounding or chamfering of the edges of the dovetail profiles can be added to help to facilitate this.

As shown in Figure 3, the first projection 11a extends from the flat end face of the shell around the outer edge of the shell - outer relative to the curvature of the bend of the shell - to a point lying approximately half way around that bend - a middle part of the outer edge, and transitions across then to being a dovetail groove along the rest of that outer edge. The second projection 11 b extends along the inner edge, from the other flat end face, along a substantial part of a straight section thereof to a middle part of that inner edge, and then transitions to be a dovetail groove along the rest of that inner edge. At those two middle parts, both projections perform the transition into the grooves by being tapered off with a chamfer. The grooves are likewise tapered/chamfered. This facilitates the assembly of the two shells together since no hard edge is then present at the transition from a projection into a groove to resist the alignment of the respective components, and the compression fit of the two complementary dovetail components, together.

By having each edge have both a projection and a groove, the shells are interchangeable, and identical/reversible, whereby only a single mould design needs to be produced for forming the respective shells.

The projections/grooves may be reversed on each edge. Likewise, the projections/grooves might be reversed on just one of the edges. These still maintain the interchangeability with identical shells.

With this interchangeability, when looking at the bottom shell, compared to the top shell, the shells are inverted relative to one another (with the edges of the top shell pointing downwards, and the edges of the bottom shell facing upwards). Therefore, as shown in Figure 3, the first dovetail groove 12c of the upper shell will receive the second projection 11c of the lower shell, the first dovetail groove 12a of the lower shell will receive the first projection 11 a of the upper shell, etc.

The shells 6 of Figure 3 have two main shell portions 9, 10 each with a thickness of approximately 25 mm, and together in use define an inside chamber for receiving a duct, the chamber having a diameter of approximately 150 mm. Different sizes of shell, however, will be provided for different duct diameters. For example, common sizes would be 150, 125 or 100 mm, although the skilled person will appreciate that the inner diameter of the shells can be provided to suit the outer diameter of duct being insulated.

Referring next to Figure 4, an exploded perspective view of an alternative pair of shells 6, which are according to the invention is shown, for in use surrounding a 90 degree bend of a duct 2. The embodiment of the present invention shown in this figure has a coupling means where each edge of the shells has a plurality of teeth 13a-d for engaging or intermeshing with corresponding teeth on the opposing shell of the pair of shells.

This embodiment comprises two rows of said teeth. A single row of teeth might be preferable. Likewise more than two rows of teeth may be preferable. However, for the given width of insulatory material, two rows of teeth can be accommodated, without making them insufficiently robust to interengage with opposing teeth.

Teeth on each row of teeth on each edge of each shell 13a, 13b are offset relative to the teeth of the adjacent row, yet the teeth within each row are approximately equally spaced along the whole length of the row. This forms a regular zig-zag arrangement of teeth along each edge of each shell. Other spacing between and arrangements of the teeth are, however, possible.

Adjacent teeth on the shorter inner edge of each shell 13c, 13d are also offset, but the 90° angle caused by the curvature of the bend, and the provision of the straight end parts of the bend, require a unique transition to ensure reversibility for the shells - there is 45° transition line build into the teeth at the centre of the bend.

The teeth have chamfered (or rounded) edges. This can serve to help or facilitate the interengagement of the teeth when assembling a pair of shells onto a length of duct, e.g. if not perfectly aligned.

The teeth will typically interengage with opposing teeth with an interference fit, rather than by being dovetailed together.

More or fewer teeth, larger and/or smaller teeth, and variable sizes of teeth/gaps therebetween along the edges of the shells, can also be used if preferred. For preserving reversibility, the teeth should match corresponding gaps on the opposite ends of the same edge. However, where reversibility is not essential, that is optional.

An intermediate joining component might also be desirable to link together adjacent shells. For example, all edges may comprise continuous grooves, with a joining biscuit or the like being used to span between those grooves, which biscuit can fit within both grooves of opposing edges with an interference fit.

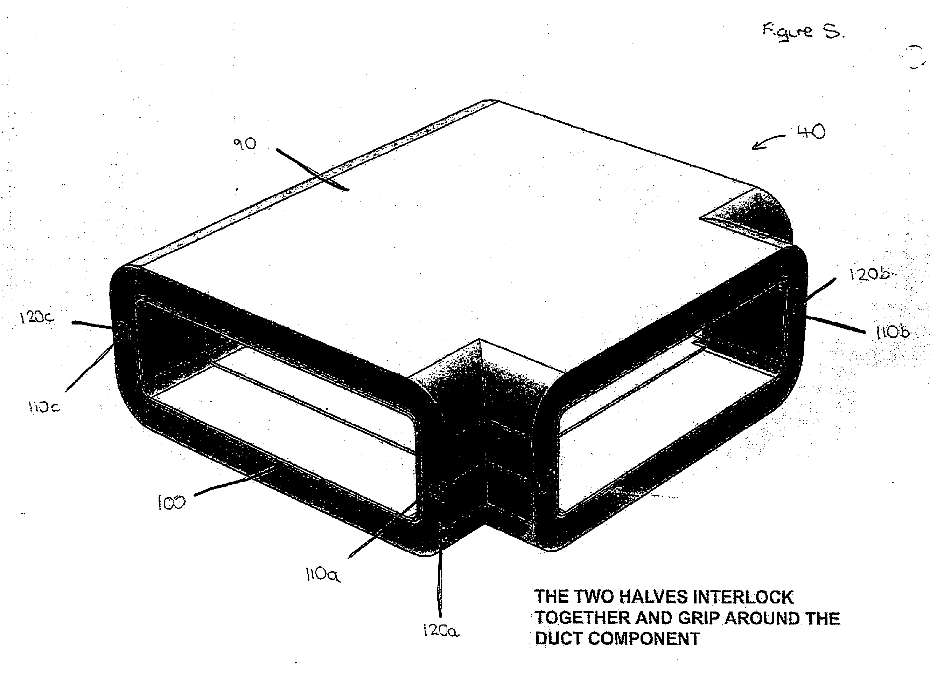

Referring next to Figure 5, a perspective view of an assembled pair of shells is shown, in which is located a T-junction for the ducting. See, for example, the T-junction shown in Figure 2. The pair of shells - shown in exploded form in Figure 6 - has a top section 90, and a bottom section 100, each with four components (all shown in Figure 6). The top section 90 has two dovetail grooves, 120b 120c and two projections 110a 110d, which interlock with complementary projections 110b, 110c and dovetail grooves 120a, 120d, respectively, as located on the bottom section. This then completes the encasement of the T-junction of the ducting.

The arrangement of the components are again arranged, as with the embodiment of Figure 3, so as to allow the shells to be both formed from a single mould cavity as the dovetail grooves and projections on the bottom section are identical (but turned over) compared to those of the top section.

The second dovetail 120c extends along approximately half of the full length of the respective edge of the top section - the rear edge of the back of the T-junction. The dovetails and pins on the bottom section are an inverse of those on the top section through the horizontal plane.

Then, for the front edges of the back of the T-junction, and the sides of the branch that extends therefrom, there is a projection 110a extending around the length of one of the respective front edges of the top section, forming an L-shaped projection, and a first dovetail groove 120b extending around the length of the other respective front edge thereof to form an L-shaped dovetail groove.

With this arrangement, the two shells of the T-junction pair of shells are reversible and can be formed from a single mould cavity. In particular, the dovetail groove and projection joints 110a/120a and 110b/120b provide reversibility of the shells since these joints are oppositely L-shaped.

All of the components for attaching opposing pairs of shells together can be formed integrally into or onto a respective surface/edge of the shells.

With the preferred reversibility of the shells, the shells can each be used as either a top or a bottom one of the pair of shells at each part of the ducting, i.e. the top and bottom shells of the respective pairs of shells are each reversible.

Each shell in the embodiment of Figures 2, 5 and 6 comprises a plurality of substantially planar walls, arranged to define, in the assembled pairs, appropriate internal cavities for receiving ducting, with appropriate open ends for connecting adjacent ducting elements together. The adjacent pairs of shells then abut one another at their facing end walls. For the embodiment of Figure 5, three such end walls are provided since the embodiment is for a T-junction. There are instead only two for the other pairs of shells - i.e. the bends and the straights.

The size of the cavity can be such as to accommodate standard forms of ducting. As such, preferred sized for the cavity, within the assembled pairs of shells, are approximate rectangles (potentially, as shown, with rounded corners - the ducting is usually formed with rounded corners to facilitate handling, and the rounded corners allow them to fit, within the shells will remove stress concentrations, and therefore make the shells stronger, or less prone to failure), with rectangle sizes typically being one of: 110 x 54mm, 204 x 60mm, 220 x 90mm, 234 x 29mm or 308 x 29 mm. Other sizes, however, are possible for the apertures and the skilled person will recognise that the sizing will typically depend on the height and width of the duct being insulated. Step ups (or downs) are also possible. For example, with the T-junction shells, the apertures within the straight back portion may be different to that of the branch. Likewise for the straight shells, one end may have a different internal (and external if the thickness of the insulation is to be preserved) size than the other. With these arrangements, reversibility is even able to be maintained for the respective shells of the pairs of shells. However, for other step-ups and step downs, reversibility typically will not be retained, e.g. on bends - symmetricality is needed for reversibility to be maintainable.

Cross junctions would be a further embodiment in which the present invention can be used, and it being symmetrical about a longitudinal axis of the ducting contained therein allows it also to comprise step-ups or step downs.

The present invention has been described above purely by way of example. Modifications in detail may be made to the invention within the scope of the claims as appended hereto.

## Claims

1. A duct insulation system for insulating at least a part of a ducting system (2), comprising a plurality of shells (6) of insulating material for arrangement around or along a length of a ducting element (2) within the ducting system, and coupling means (13a-d) for holding at least two adjacent shells together, wherein the system, in use, surrounds at least a substantial part of the ducting element (2) and provides a substantially rigid outermost casing around the ducting element, and wherein the coupling means are located between said shells, wherein the coupling means comprises two or more components for connection together, and wherein one or more of the components is a plurality of teeth (13a-d) for connecting together with a plurality of complementary teeth, there being two rows of teeth formed adjacent one another in said one or more of the components, the teeth in each row being offset from each other.

2. A duct insulation system according to Claim 1, wherein the coupling means (13a-d) are formed of insulating material.

3. A duct insulation system according to any one of the preceding claims, wherein the shells (6) are formed of a plurality of walls arranged for surrounding at least a substantial part of the ducting element, such that, in use, said shells provide a generally rectangular in section outermost casing for the ducting element, or the shells are formed of a wall arranged for surrounding at least a substantial part of the ducting element, such that, in use, said shells provide a generally round in section outermost casing for the ducting element.

4. A duct insulation system according to any one of the preceding claims, wherein one or more of the components of the coupling means, on one of the shells (6), in use is connected together with one or more second component of the coupling means, on a second shell, to couple together a casing that substantially surrounds a T-junction of the ducting system or a bend within the ducting system.

5. A duct insulation system according to any one of the preceding claims, wherein at least some of the shells (6) are provided in pairs or sets, the shells of the pairs or sets being formed from a single design of mould cavity, the shells within the pair or set being interchangeable or reversible and assemblable together, using the coupling means, for providing the substantially rigid outermost casing around the ducting element, the pair or set preferably being used to surround the perimeter of a ducting element.

6. A duct insulation system according to any one of the preceding claims, the components (13a-d) being formed integrally into or onto a respective one of the shells.

7. A duct insulation system according to any one of the preceding claims, wherein said shells (6) and/or thecoupling means (13a-d) are formed of expanded polystyrene foam.

8. A duct insulation system according to any one of the preceding claims, wherein the system further comprises a layer of insulating material along and around a substantial part of the shells (6) and/or the coupling means (13a-d), preferably the layer is an outer layer, and more preferably the layer is a metallic foil.

9. A kit of parts-adapted to form a duct insulation system according to any one of the preceding claims, the kit comprising a plurality of shells (6) for arrangement around or along the length of a duct (2), and coupling means (13a-d) for holding adjacent shells together.

## Patentansprüche

1. Kanalisolierungssystem zum Isolieren zumindest eines Teils eines Kanalführungssystems (2), umfassend: eine Vielzahl von Schalen (6) aus Isoliermaterial zur Anordnung rings um ein oder entlang einer Länge eines Kanalführungselements (2) innerhalb des Kanalführungssystems, und Koppelmittel (13a-d) zum Zusammenhalten von mindestens zwei benachbarten Schalen, worin das System bei Gebrauch zumindest einen wesentlichen Teil des Kanalführungselements (2) umgibt und ein im Wesentlichen starres äußerstes Gehäuse rings um das Kanalführungselement bereitstellt und worin die Koppelmittel zwischen den Schalen angeordnet sind, worin die Koppelmittel zwei oder mehr Komponenten zur gegenseitigen Verbindung umfassen und worin eine oder mehrere der Komponenten eine Vielzahl von Zähnen (13a-d) zur gegenseitigen Verbindung mit einer Vielzahl von komplementären Zähnen ist, wobei es zwei Reihen von Zähnen gibt, die aneinander angrenzend in der einen oder mehreren der Komponenten ausgebildet sind, wobei die Zähne in jeder Reihe voneinander abgesetzt sind.

2. Kanalisolierungssystem nach Anspruch 1, worin die Koppelmittel (13a-d) aus Isoliermaterial gebildet sind.

3. Kanalisolierungssystem nach einem der vorhergehenden Ansprüche, worin die Schalen (6) aus einer Vielzahl von Wänden gebildet sind, die zum Umgeben zumindest eines wesentlichen Teils des Kanalführungselements eingerichtet sind, so dass die Schalen bei Gebrauch ein äußerstes Gehäuse mit im Wesentlichen rechteckigem Querschnitt für das Kanalführungselement bereitstellen, oder die Schalen aus einer Wand gebildet sind, die zum Umgeben zumindest eines wesentlichen Teils des Kanalführungselements eingerichtet ist, so dass die Schalen bei Gebrauch ein äußerstes Gehäuse mit im Wesentlichen rundem Querschnitt für das Kanalführungselement bereitstellen.

4. Kanalisolierungssystem nach einem der vorhergehenden Ansprüche, worin bei Gebrauch eine oder mehrere Komponenten der Koppelmittel an einer der Schalen (6) mit einer oder mehreren zweiten Komponenten der Koppelmittel an einer zweiten Schale verbunden werden, um ein Gehäuse zusammenzukoppeln, das ein T-Stück des Kanalführungssystems oder ein Winkelstück innerhalb des Kanalftihrungssystems im Wesentlichen umgibt.

5. Kanalisolierungssystem nach einem der vorhergehenden Ansprüche, worin zumindest einige der Schalen (6) in Paaren oder Sätzen bereitgestellt werden, wobei die Schalen der Paare oder Sätze aus einer einzigen Bauform einer Forrnhöhlung gebildet werden, wobei die Schalen innerhalb des Paars oder Satzes austauschbar oder umdrehbar und unter Verwendung der Koppelmittel zusammenbaubar sind, um das im Wesentlichen starre äußerste Gehäuse rings um das Kanalführungselement bereitzustellen, wobei das Paar oder der Satz vorzugsweise verwendet wird, um den Umfang eines Kanalfülrungselements zu umgeben.

6. Kanalisolierungssystem nach einem der vorhergehenden Ansprüche, wobei die Komponenten (13a-d) aus einem Stück in oder auf einer jeweiligen der Schalen gebildet werden.

7. Kanalisolierungssystem nach einem der vorhergehenden Ansprüche, worin die Schalen (6) und/oder die Koppelmittel (13a-d) aus Schaumpolystyrol gebildet werden.

8. Kanalisolierungssystem nach einem der vorhergehenden Ansprüche, worin das System ferner eine Schicht aus Isoliermaterial längs und rings um einen wesentlichen Teil der Schalen (6) und/oder der Koppelmittel (13a-d) umfasst, wobei die Schicht vorzugsweise eine äußere Schicht ist und die Schicht besonders bevorzugt eine Metallfolie ist.

9. Ein Bausatz aus Teilen, die dafür eingerichtet sind, ein Kanalisolierungssystem nach einem der vorhergehenden Ansprüche zu bilden, wobei der Bausatz eine Vielzahl von Schalen (6) zur Anordnung rings um ein oder entlang der Länge eines Kanals (2) und Koppelmittel (13a-d) zum Zusammenhalten benachbarter Schalen umfasst.

## Revendications

1. Système d'isolation de conduit pour l'isolation d'au moins une partie d'un système de conduits (2), comprenant une pluralité de coques (6) en matière isolante destinées à être agencées autour ou le long d'un élément de conduit (2) dans le sens de la longueur dans le système de conduits, et un moyen d'accouplement (13a-d) permettant de maintenir ensemble au moins deux coques adjacentes, dans lequel le système, lors de l'utilisation, entoure au moins une partie importante de l'élément de conduit (2) et fournit une gaine extérieure essentiellement rigide autour de l'élément de conduit, et dans lequel le moyen d'accouplement est situé entre lesdites coques, dans lequel le moyen d'accouplement comprend au moins deux éléments constitutifs destinés à se connecter l'un à l'autre, et dans lequel au moins un des éléments constitutifs consiste en une pluralité de dents (13a-d) destinées à se connecter avec une pluralité de dents complémentaires, deux rangées de dents étant formées de manière adjacente l'une à l'autre dans ledit ou lesdits éléments constitutifs, les dents de chaque rangée étant décalées les unes par rapport aux autres.

2. Système d'isolation de conduit selon la revendication 1, dans lequel le moyen d'accouplement (13a-d) est formé d'une matière isolante.

3. Système d'isolation de conduit selon l'une quelconque des revendications précédentes, dans lequel les coques (6) sont formées d'une pluralité de parois agencées de manière à entourer au moins une partie importante de l'élément de conduit, de façon que, lors de l'utilisation, lesdites coques fournissent une gaine extérieure de section globalement rectangulaire pour l'élément de conduit, ou les coques sont formées d'une paroi agencée de manière à entourer au moins une partie importante de l'élément de conduit, de façon que, lors de l'utilisation, lesdites coques fournissent une gaine extérieure de section globalement ronde pour l'élément de conduit.

4. Système d'isolation de conduit selon l'une quelconque des revendications précédentes, dans lequel au moins un des éléments constitutifs du moyen d'accouplement, sur une des coques (6), est connecté, lors de l'utilisation, avec au moins un second élément constitutif du moyen d'accouplement, sur une seconde coque, pour assembler une gaine qui entoure essentiellement une jonction en T du système de conduits ou un coude dans le système de conduits.

5. Système d'isolation de conduit selon l'une quelconque des revendications précédentes, dans lequel aux moins certaines des coques (6) sont fournies sous forme de paires ou d'ensembles, les coques des paires ou des ensembles étant moulées à partir d'une configuration unique de cavité de moule, les coques de la paire ou de l'ensemble étant interchangeables ou réversibles et pouvant être assemblées ensemble en utilisant le moyen d'accouplement, pour fournir la gaine extérieure essentiellement rigide autour de l'élément de conduit, la paire ou l'ensemble étant utilisé/e de préférence pour entourer le périmètre d'un élément de conduit.

6. Système d'isolation de conduit selon l'une quelconque des revendications précédentes, les éléments constitutifs (13a-d) étant formés de manière intégrale dans ou sur une des coques respectives.

7. Système d'isolation de conduit selon l'une quelconque des revendications précédentes, dans lequel lesdites coques (6) et/ou le moyen d'accouplement (13a-d) sont formés de mousse de polystyrène expansé.

8. Système d'isolation de conduit selon l'une quelconque des revendications précédentes, dans lequel le système comprend, en outre, une couche de matière isolante le long et autour d'une partie importante des coques (6) et/ou du moyen d'accouplement (13a-d), la couche étant de préférence une couche extérieure et la couche étant, plus préférablement, une feuille métallique.

9. Kit de pièces adaptées pour former un système d'isolation de conduit selon l'une quelconque des revendications précédents, le kit comprenant une pluralité de coques (6) destinées à être agencées autour ou le long d'un conduit (2) dans le sens de la longueur et un moyen d'accouplement (13a-d) permettant de maintenir ensemble des coques adjacentes.
